(19) Europäisches Patentamt
European Patent Office
Office européen des brevets

(11) Publication number: **0 303 702 A1**

(12) **EUROPEAN PATENT APPLICATION**
published in accordance with Art. 158(3) EPC

(21) Application number: 88901637.4

(51) Int. Cl.⁴: **E 01 C 5/06**

(22) Date of filing: 12.02.88

Data of the international application taken as a basis:
(86) International application number: PCT/JP 88/00140
(87) International publication number: WO 88/06207 (25.08.88 88/19)

(30) Priority: 13.02.87 JP 29600/87
14.07.87 JP 175450/87
10.02.88 JP 27667/88

(43) Date of publication of application: 22.02.89 Bulletin 89/8

(84) Designated Contracting States: BE DE FR GB IT NL SE

(71) Applicant: CHICHIBU CEMENT KABUSHIKI KAISHA, c/o Nihon Kogyo Club 4-6 Marunouchi 1-chome, Chiyoda-ku Tokyo (JP)
Applicant: INAX CORPORATION, 6 Koiehonmachi 3-chome, Tokoname-Shi Aichi (JP)
Applicant: ILB CO. LTD., Hongo 1-chome, Bunkyo-ku, Tokyo 113 (JP)

(72) Inventor: YOSHIDA, Kinoto Chichibu Cement Co., Ltd., Kanren Seihin Honbu 1-1, Tsukimicho 2-chome, Kumagaya-shi Saitama 360 (JP)
Inventor: FUJII, Morizumi Inax Corporation, 6, Koie Honmachi 3-chome Tokoname-shi, Aichi 479 (JP)
Inventor: TSUDA, Tokihiro 159-42, Shimotakano Sugito-machi, Kita Katsushika-gun, Saitama 345 (JP)

(74) Representative: Deans, Michael John Percy, Lloyd Wise, Tregear & CO. Norman House 105-109 Strand, London WC2R OAE (GB)

(54) **BLOCK.**

(57) Block (1) for pavement characterized in that belt-like portions (2) are formed around the entire periphery of the upper surface of the block by cutting off the periphery in such a manner as to be recessed inward, and to form steps between the beltlike portions (2) and the upper surface of the block (1). According to this structure, the upper end portions of adjacent blocks do not come into mutual contact when they push each other, so that the breakage rate of the blocks can be reduced remarkably.

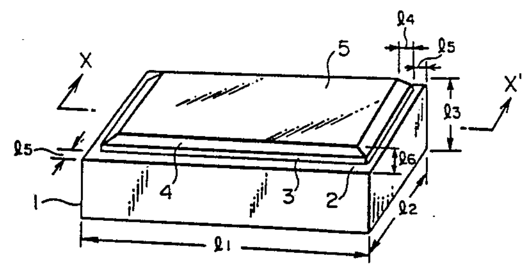


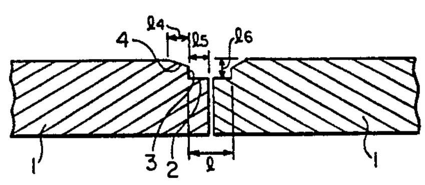


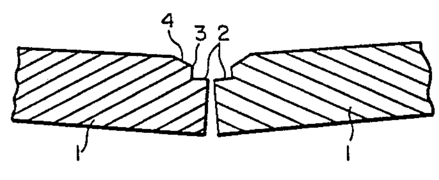


EP 0 303 702 A1

DESCRIPTION

# BLOCK

## Technical Field

The present invention relates to blocks for pavement which are laid on a road surface such as the surface of a street.

## Background Art

General configurations of blocks for pavement include square, rectangular, triangular, hexagonal, octagonal, circular and other various configurations. In view of the interrelation between a multiplicity of blocks which are successively laid adjacent to each other, detailed configurations of the peripheral edges of these blocks need to be designed so that each pair of adjacent blocks are engageable with each other, and various edge structures have heretofore been used, for example, a straight edge, a curved edge, a combination of these two, a corrugated edge, etc.

Fig. 8 schematically shows a rectangular block as one example of conventional blocks. Fig. 8(a) is a side view of a unit block.

As shown in Fig. 8(a), a conventional block 1 is a rectangular parallelepiped having a length $\ell_1$, a breadth $\ell_2$ (not shown) and a height $\ell_3$, and the entire peripheral edge of the upper surface is chamfered (sloped) over a distance $\ell_4$.

In actual use, unit blocks 1 are laid on a base course in such a manner that these blocks 1 are spread thereover.

At that time, the blocks 1 are laid such that the general configuration of the laid blocks 1 defines a predetermined design (mosaic) by appropriately arranging the blocks 1 or effectively using different colors for the blocks 1.

However, paving blocks of this type are constantly subjected to loads applied from pedestrians or vehicles. Moreover, the load that is applied to each unit block also depends on the rolling condition of the base course where it is laid. As a result, each of the laid unit blocks is subjected to complicated force and it is general that the blocks undesirably butt against each other (i.e., blocks which are adjacent to each other freely change their positions independently of each other), resulting in a position such as that shown in Fig. 8(b), that is, the adjacent blocks being at an angle to each other. Thus, the blocks, which are in line contact with each other, are eventually broken.

This kind of breakage not only spoils the appearance of the road surface but also makes it impossible to ensure the safety of pedestrians.

The present invention aims at solving the above-described problems and it is an object of the invention to provide blocks for pavement which are unlikely to break.

## Disclosure of Invention

To attain the above-described object, the present invention provides a block for pavement which has an inwardly recessed, notched belt-shaped portion provided along the entire peripheral edge of the upper surface thereof, thereby defining a step between the belt-shaped portion and the upper surface of the block.

Thus, even when laid blocks have moved freely irrespective of the position relative to blocks which are adjacent thereto and thus changed the relative position, there is no possibility of the adjacent blocks contacting each other at their upper end edges. Accordingly, it is possible to lower the rate of breakage of blocks.

## Brief Description of Drawings

Fig. 1(a) shows the arrangement of one embodiment of a block according to the present invention; Fig. 1(b) shows the dimensional relationship between laid blocks; Fig. 1(c) shows unit blocks undesirably butting against each other; Fig. 2 shows experimental results that reveal advantages obtained when a unit block is provided with a belt-shaped portion; Fig. 3 shows experimental results concerning the rate of breakage for various dimensions of the belt-shaped portion; Fig. 4 shows the arrangement of another embodiment; Figs. 5, 6, 7(a), 7(b) and 7(c) are fragmentary side views showing the respective arrangements of further embodiments; and Figs. 8(a) and 8(b) illustrate a conventional block.

## Best Mode for Carrying Out the Invention

To describe the present invention more specifically, the best mode for carrying out the invention will be explained hereinunder with reference to the drawings.

Referring to Fig. 1(a), the general configuration of the block is a rectangular parallelepiped having a length $\ell_1$, a breadth $\ell_2$ and a height $\ell_3$ in the same way as in the case of the above-described arrangement shown in Fig. 8.

In this embodiment, the edge of each side of the block 1 is cut off inwardly by a distance $\ell_5$, thereby forming a planar belt-shaped portion 2, and the belt-shaped portion 2 is provided with a slant surface 4 through an upright wall surface 3.

Accordingly, as will be clear from Figs. 1(a) and 1(b), the block has at the outermost side thereof the belt-shaped portion 2 extending along the entire peripheral edge which is formed by inwardly notching the edge by the distance $\ell_5$, and the slant surface 4 is provided over the entire peripheral edge inside the belt-shape portion 2 through the upright wall surface 3. Thus, a two-step structure is defined on the upper surface of the block, the dimension thereof measured inwardly from the outer end being equal to a total distance of $\ell_4+\ell_5$.

The distance from the belt-shaped portion 2 to the top surface 5 of the block is $\ell_6$.

It should be noted that the most suitable width $\ell_5$ of the belt-shaped portion 2 is in the range of from 1 to 5 mm, while the most suitable depth $\ell_6$ from the top surface 5 to the belt-shaped portion 2 is in the range of from 5 to 30 mm.

Fig. 1(b) shows the dimensional relationship between blocks having the above-described arrangement which are laid adjacent to each other, Fig. 1(b) being a section of the unit blocks taken along the lengthwise side $\ell_1$ and viewed from the direction indicated by the line X-X'.

It should be noted that in Fig. 1(b) the joint width is denoted by $\ell$.

Fig. 1(c) shows unit blocks undesirably butting against each other.

Fig. 2 shows experimental results that reveal advantages obtained when each unit block is provided with a belt-shaped portion.

In Fig. 2, the rate of breakage (the ratio of a number of broken blocks to the total number of blocks) is plotted along the axis of ordinate, while the number of times of passing of a truck having an overall weight of 7 tons is plotted along the axis of abscissa.

Experiments on blocks were conducted under the following four different conditions:

(A) blocks provided with no belt-shaped portion

(B) blocks provided with no belt-shaped portion but a slant surface alone

(C) blocks provided with a belt-shaped portion of 2 mm alone

(D) blocks provided with both a belt-shaped portion of 2 mm and a slant surface

As will be clear from Fig. 2, in comparison of the conventional blocks having "no belt-shaped portion + slant surface", i.e., (B), and the blocks provided with "a belt-shaped portion of 2 mm", i.e., (C), the breakage rate reduced from about 13% to about 2% at a stroke. Further, in the case of the blocks provided with "both a belt-shaped portion of 2 mm and a slant surface", the breakage rate was substantially zero.

Fig. 3 is a graph showing experimental results concerning the rate of breakage for various dimensions of the belt-shaped portion. In Fig. 3, the relative breakage rate is plotted along the axis of ordinate, while the dimension of the belt-shaped portion is plotted along the axis of abscissa.

As will be clear from Fig. 3, the relative breakage rate rises suddenly when the dimension of the belt-shaped portion is less than 1 mm or greater than 5 mm. The breakage that occurs when the dimension is less than 1 mm is caused by the above-described undesirable butting, whereas, the breakage that occurs when the dimension is greater than 5 mm is casued by shearing of the joint that occurs when a tire of the traveling vehicle passes thereover.

Accordingly, it is most preferable to provide a belt-shaped portion within the range of from 1 to 5 mm from the side surface of the block.

It has been confirmed that, when the depth of the belt-shaped portion is less than 5 mm, the block has no durability with respect to the breakage attributable to the butting, whereas, when the depth is greater than 30 mm, the block cannot be expected to exhibit satisfactory load dispersing performance and therefore does not function as a paving material. Accordingly, it is preferable to provide a belt-shaped portion within the range of from 5 to 30 mm from the upper surface of the block.

Fig. 4 shows the arrangement of another embodiment.

In this embodiment, the block 1 having the already described arrangement comprises a base 1-1 and a tile 6 which is a separate member, the base 1-1 and the tile 6 being bonded together by means of mortar 7.

More specifically, the tile 6 is formed such that its planar size is somewhat smaller than that of the base 1-1, whereby a belt-shaped portion is defined by the peripheral edge of the base 1-1 when the tile 6 is bonded to the upper surface of the base 1-1.

It is clear that it is possible in this embodiment also to obtain the same advantages as in the case of Fig. 1.

Fig. 5 shows the arrangement of still another embodiment, the figure being a fragmentary side view illustrating only one end portion of a block.

In this embodiment, a belt-shaped portion 2 which is provided along the entire peripheral edge of a block 1 and the top surface 5 of the block 1 are connected through a slant surface 4, while the wall surface 3 shown in Fig. 1 is omitted.

Fig. 6 shows the arrangement of a further embodiment, the figure being a fragmentary side view illustrating only one end of a block in the same way as in Fig. 5.

In this embodiment, a block is formed by bonding together a base 1-1 and a tile 6 which is a separate member in the same way as in Fig. 4. In this case, however, the peripheral edge of the tile 6 is formed into a slant surface 4.

Accordingly, when the tile 6 is bonded to the upper surface of the base 1-1, a belt-shaped portion 2 is defined around the entire peripheral edge of the tile 6.

The foregoing blocks, respectively shown in Figs. 5 and 6, also provide advantages which are similar to those in the case of Fig. 1.

Fig. 7 shows still further embodiments. In the embodiment shown in Fig. 7(a), the belt-shaped portion 2-1 is slanted, and the edge 1-2 of the upper surface of the block is chamfered. In the embodiment shown in Fig. 7(b), both the belt-shaped portion 2-2 and the edge 1-2 of the upper surface of the block are chamfered. In the embodiment shown in Fig. 7(c), in addition to the configuration shown in Fig. 7(b), the intermediate portion 2-3 is also chamfered to provide a curved surface.

Although in the foregoing embodiments the present invention has been described by way of the examples in which the configuration of the belt-shaped portion is variously changed, the present invention is not necessarily limited to the described configurations. The results of an experiment conducted for each of the cases have revealed that it is possible to obtain advantages similar to those in each of the foregoing embodiments, provided that an inwardly recessed, notched belt-shaped portion is provided along the entire peripheral edge of the upper surface of a block.

## Industrial Applicability

The blocks of the present invention are suitable for being used as paving blocks which may be constantly loaded on the surface of a street.

WHAT IS CLAIMED IS:

1. A block for pavement which is laid on a road surface, said block comprising an inwardly recessed, notched belt-shaped portion provided along the entire peripheral edge of the upper surface thereof, thereby defining a step between said belt-shaped portion and the upper surface of said block.

2. A block according to Claim 1 which comprises a base and a tile which is bonded to the upper surface of said base such that the peripheral edge of said base remains as being a belt-shaped portion.

3. A block according to Claim 1 or 2, wherein said belt-shaped portion has a depth of from 5 to 30 mm from the upper surface of said block and a width of from 1 to 5 mm from the side surface.

FIG. 1(a)

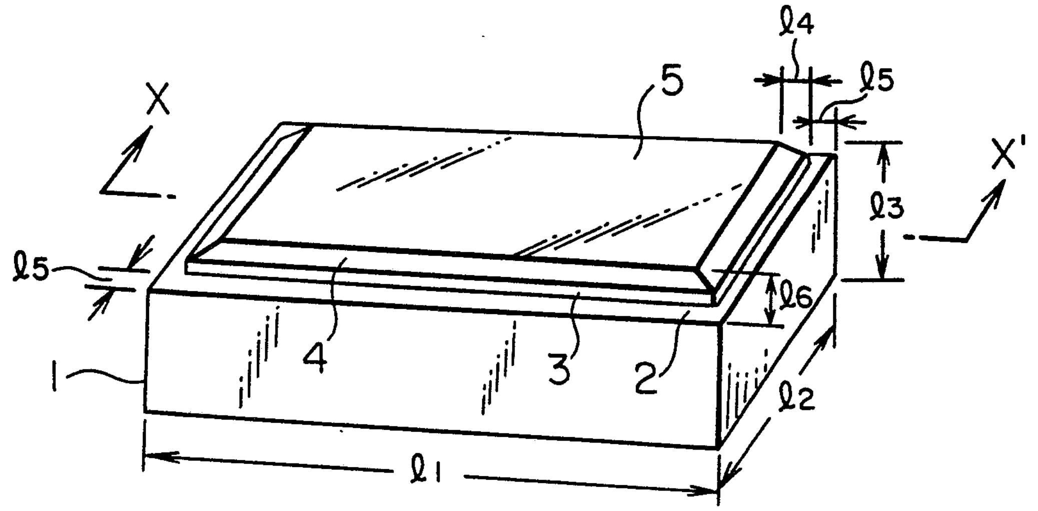


FIG. 1(b)

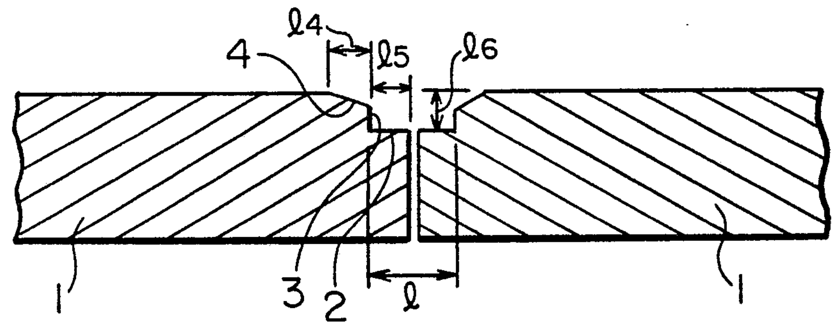


FIG. 1(c)

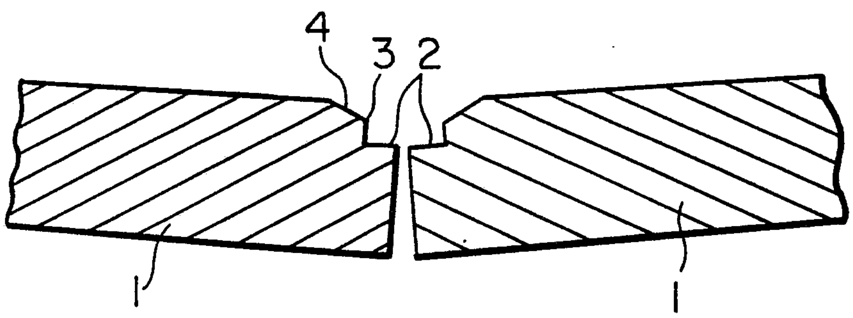

FIG. 2

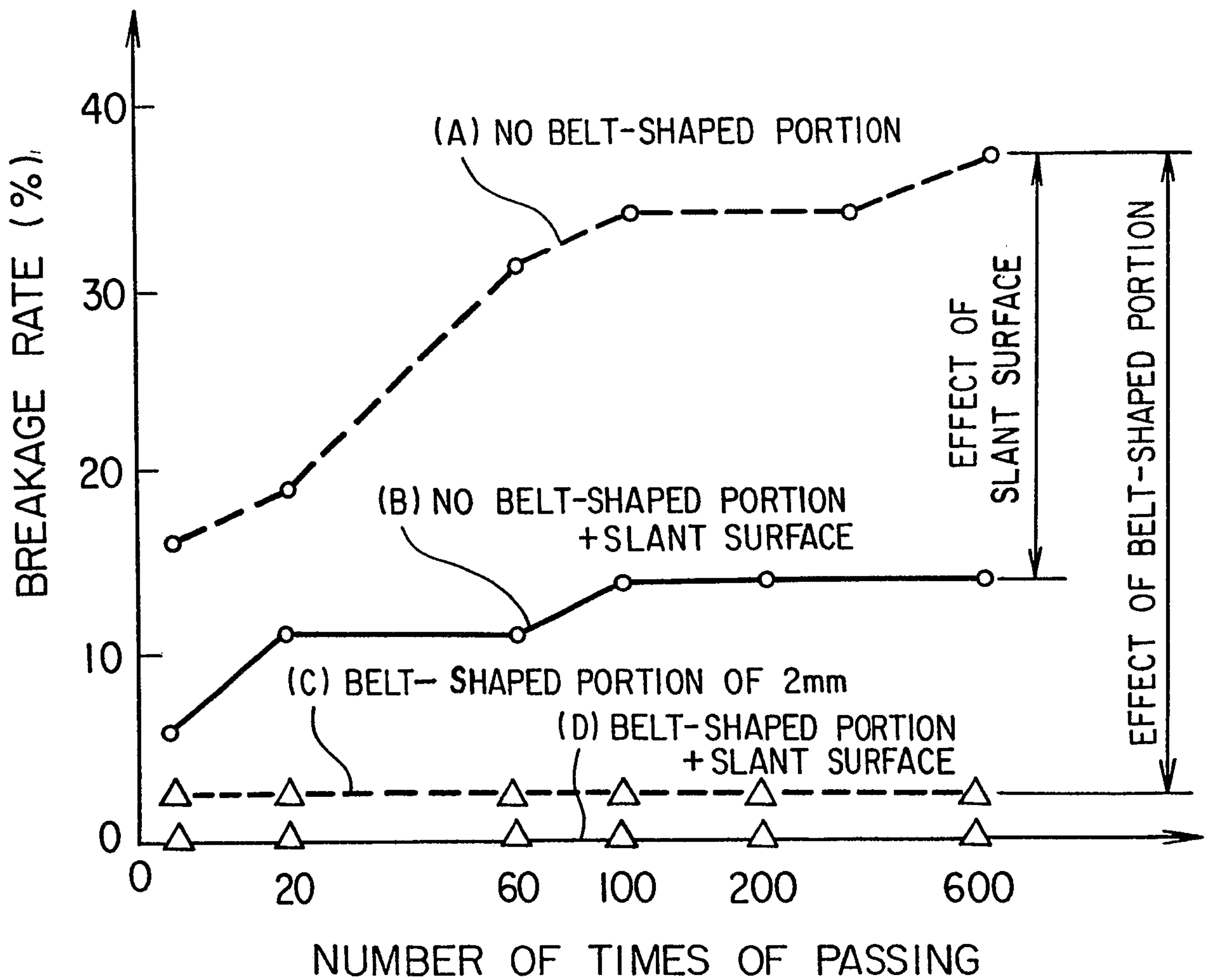
BREAKAGE RATE (%)
40
30
20
10
0
(A) NO BELT-SHAPED PORTION
(B) NO BELT-SHAPED PORTION +SLANT SURFACE
(C) BELT- SHAPED PORTION OF 2mm
(D) BELT-SHAPED PORTION +SLANT SURFACE
EFFECT OF SLANT SURFACE
EFFECT OF BELT-SHAPED PORTION
0
20
60
100
200
600
NUMBER OF TIMES OF PASSING

FIG. 3

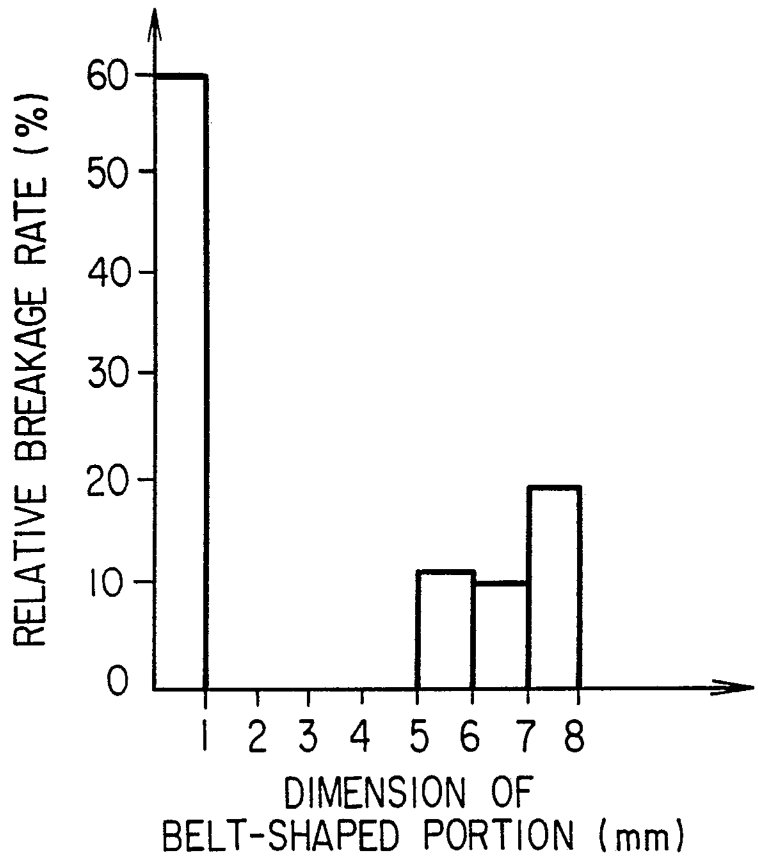


FIG. 4

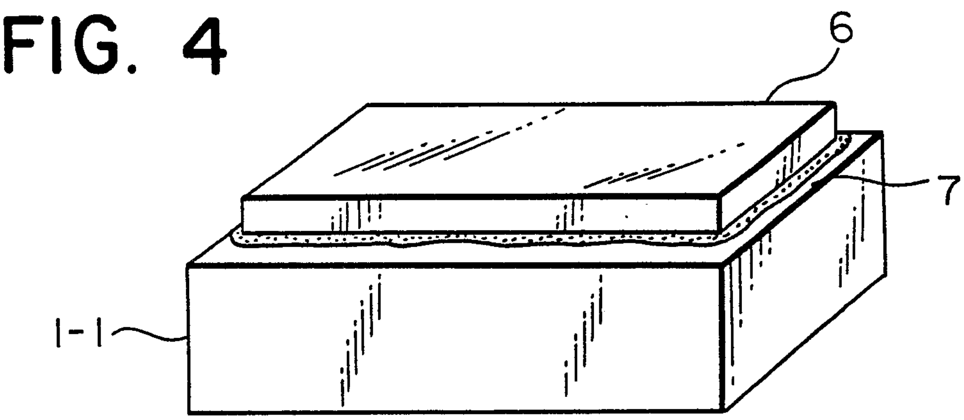


FIG. 5

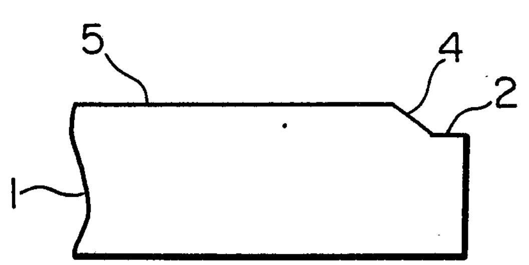


FIG. 6

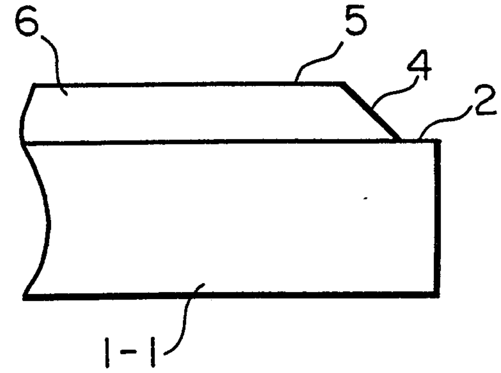

# FIG. 7(a)

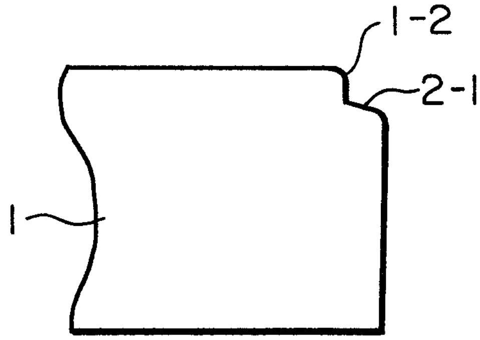


# FIG. 7(b)

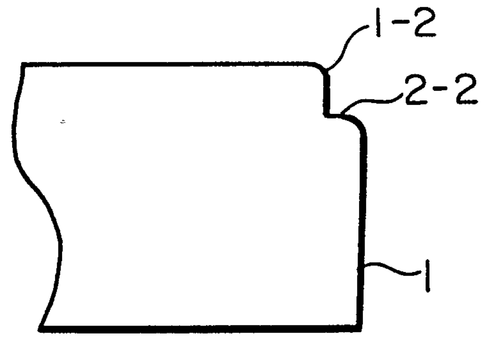


# FIG. 7(c)

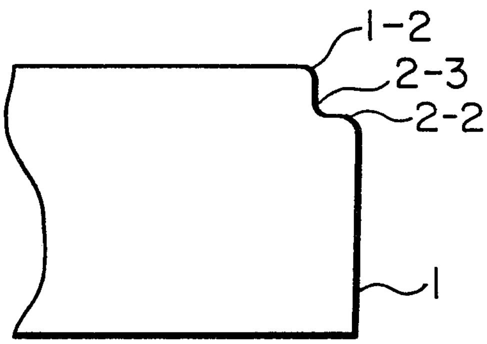


# FIG. 8(a)

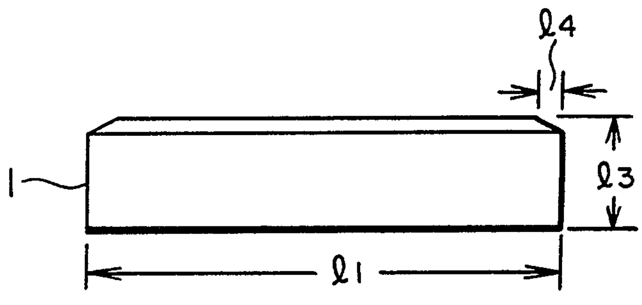


# FIG. 8(b)

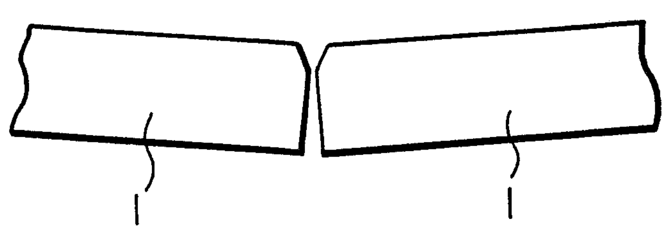

# INTERNATIONAL SEARCH REPORT 00303702

International Application No PCT/JP88/00140

**I. CLASSIFICATION OF SUBJECT MATTER** (if several classification symbols apply, indicate all) [3]

According to International Patent Classification (IPC) or to both National Classification and IPC

Int.Cl$^4$ E01C5/06

**II. FIELDS SEARCHED**

Minimum Documentation Searched [4]

| Classification System | Classification Symbols |
|---|---|
| IPC | E01C5/06 |

Documentation Searched other than Minimum Documentation to the Extent that such Documents are Included in the Fields Searched [5]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | JP, B1, 48-39978 (Hans Turkil Hadbigsen) 28 November 1973 (28. 11. 73) Figs. 3, 4 (Family: none) | 1-3 |
| X | JP, U, 52-143227 (Ishikawajima Kenzai Kogyo Kabushiki Kaisha) 29 October 1977 (29. 10. 77) Fig. 1 (Family: none) | 1-3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| April 6, 1988 (06. 04. 88) | April 18, 1988 (18. 04. 88) |
| **International Searching Authority** [1] | **Signature of Authorized Officer** [20] |
| Japanese Patent Office | |